# EUROPEAN PATENT APPLICATION

(11) **EP 3 496 309 A1**
(43) Date of publication of application: **12.06.2019**
(21) Application number: 17209389.0
(22) Date of filing: 21.12.2017
(51) Int. Cl.: H04L 1/00

(54) **WIRELESS COMMUNICATION METHOD AND COMMUNICATION TERMINAL DEVICE USING THE SAME**

(30) Priority: 05.12.2017 TW 106142574
(71) Applicant: Industrial Technology Research Institute, Chutung, Hsinchu 31040 (TW)
(72) Inventor: TAN, Tze-Jie, Hsinchu County 310 (TW); CHIUEH, Tzi-Cker, Taipei City 108 (TW); YANG, Jen-Shun, Hsinchu County 302 (TW)
(74) Representative: dompatent von Kreisler Selting Werner - Partnerschaft von Patent- und Rechtsanwälten mbB

(57) **Abstract**

A wireless communication method of a communication terminal device and a communication terminal device are provided. The wireless communication method includes: the communication terminal device sniffs a radio signal, captures a packet from the radio signal, and determines whether the packet meets a source condition; the communication terminal device determines whether the packet meets a data condition if the source condition is met; the communication terminal device extracts a data payload from the packet if the data condition is met; the communication terminal device determines whether a data error rate of the data payload is greater than a tolerable value; the communication terminal device sends an error correcting information to a server if the error rate of the data payload is greater than the tolerable value, such that the server provides an error correction parameter for updating a forward error correction codding scheme to the wireless transmitting device.

## Description

### TECHNICAL FIELD

The disclosure relates to a wireless communication method and a communication terminal device using the same.

### BACKGROUND

As the service quality of network streaming improves, how to satisfy the demand of low latency and high transmission rate in wireless communication is one of the issues to be solved in the industry.

WiFi is one of wireless communication protocols and is widely used. WiFi may support multicast, that is, every access point (AP) may provide wireless transmission service to multiple user equipments. However, in order to serve a user equipment whose location is farther, an AP may decrease the transmission rate for all user equitments. The bandwidth may also be insufficient because the AP establishes connections with too many user equipments, such that the data transmission rate fails to be increased.

### SUMMARY

The disclosure is directed to a wireless communication method and a communication terminal device using the same. According to embodiments of the disclosure, establishing connection with a wireless transmitting device is not required for the communication terminal device to perform data transmission. The communication terminal device may obtain, by a way of sniffing, the radio signal which is transmitted from the wireless transmitting device to a dummy wireless receiving device, and capture the packet therein. The communication terminal device may filter the captured packet through a specific condition to obtain the data payload required by the communication terminal device. Since the communication terminal device does not need to establish a connection with the wireless transmitting device, and the communication terminal device sniffs the radio signal which is transmitted by the wireless transmitting device instead, the communication terminal device does not occupy the transmission bandwidth of the wireless transmitting device. In addition, according to the error rate of the decoded data payload, the communication terminal device may also report an error correcting information to the server, such that the wireless transmitting device may adjust the error correction mechanism to decrease the data error rate.

According to one aspect of the disclosure, a wireless communication of a communication terminal device is provided. The wireless communication method includes the following steps. The communication terminal device sniffs a radio signal and captures a packet from the radio signal. The communication terminal device determines whether the packet meets a source condition or not. The source condition includes that the packet contains a specific transmitter address corresponding to a wireless transmitting device and a specific receiver address corresponding to a wireless receiving device. The communication terminal device determines whether the packet meets a data condition or not if the packet meets the source condition. The data condition includes that the packet contains a specific packet type. The communication terminal device extracts a data payload from the packet if the packet meets the data condition. The communication terminal device determines whether a data error rate of the data payload is greater than a tolerable value or not. The communication terminal device sends an error correcting information to a server if the error rate of the data payload is greater than the tolerable value, such that the server provides an error correction parameter for updating a forward error correction coding scheme to the wireless transmitting device.

According to another aspect of the disclosure, a communication terminal device is provided. The communication terminal device includes a transmission interface and a processing circuit. The transmission interface sniffs a radio signal and captures a packet from the radio signal. The processing circuit is coupled to the transmission interface and is configured to perform the following steps. Determining whether the packet meets a source condition or not. The source condition includes that the packet contains a specific transmitter address corresponding to a wireless transmitting device and a specific receiver address corresponding to a wireless receiving device. Determining whether the packet meets a data condition or not if the packet meets the source condition. The data condition includes that the packet contains a specific packet type. Extracting a data payload from the packet if the packet meets the data condition. Determining whether a data error rate of the data payload is greater than a tolerable value or not. Sending an error correcting information to a server if the error rate of the data payload is greater than the tolerable value, such that the server provides an error correction parameter for updating a forward error correction coding scheme to the wireless transmitting device.

For better understanding to above and other aspects of the disclosure, exemplary embodiments are illustrated herein below with appropriate reference to the accompanying drawings.

### BRIEF DESCRIPTION OF THE DRAWINGS

Fig. 1 shows an exemplary block diagram of a wireless communication system according to an embodiment of the disclosure.
Fig. 2 shows an exemplary flowchart of a wireless communication method according to an embodiment of the disclosure.
Fig. 3 shows an exemplary architectural diagram of the wireless communication system according to an embodiment of the disclosure.
Fig. 4 shows an exemplary sequence diagram of the wireless communication method according to an embodiment of the disclosure.
Fig. 5 shows a flowchart of the wireless communication method according to an embodiment of the disclosure.

### DETAILED DESCRIPTION

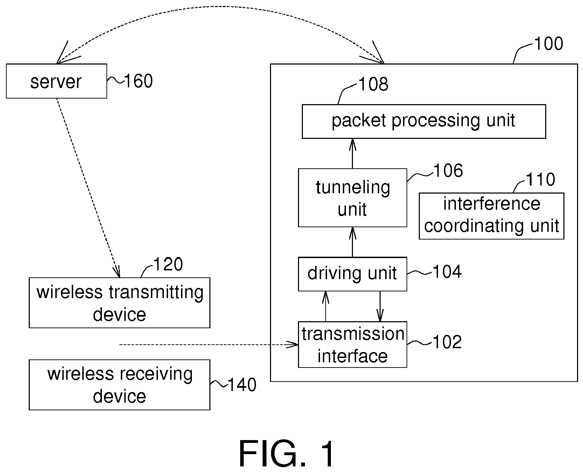

Fig. 1 shows an exemplary block diagram of a wireless communication system according to an embodiment of the disclosure. The wireless communication system includes a wireless terminal device 100, a wireless transmitting device 120, a wireless receiving device 140, and a server 160.

The wireless transmitting device 120, for example, is an access point (AP) or a wireless transmitter. The wireless transmitting device 120 has a transmitter address (for example, an internet protocol (IP) address of the wireless transmitting device). The wireless transmitting device 120 may receive a streaming data from the server 160, and then transmit the streaming data to the wireless receiving device 140 using a form of a radio signal. The wireless transmitting device 120 and the wireless receiving device 140 may communicate with each other using WiFi protocol or other wireless communication protocols, such as Bluetooth, ZigBee, etc.

The server 160, for example, is a providing node of the streaming data in a cloud network. The wireless receiving device 140, for example, is a wireless receiver. The wireless receiving device 140 has a receiver address (for example, an IP address of the wireless receiving device 140). According to embodiments of the disclosure, the wireless receiving device 140 may be deemed a dummy receiver, with the purpose of being a target for the wireless transmitting device 120 to transmit a packet. In an embodiment, the wireless transmitting device 120 and the wireless receiving device 140 are placed independently, and a distance between the wireless transmitting device 120 and the wireless receiving device 140 is less than or equal to 1 meter. The reason for this placement is described in the following. In general, a data transmission rate of the wireless transmitting device 120 would be adjusted dynamically according to the distance of the receiving terminal. That is to say, if the distance of the receiving terminal is nearer, the wireless transmitting device 120 would transmit with a higher data transmission rate. In order that the wireless transmitting device 120 may transmit packets with a fixed relative high data transmission rate, the wireless receiving device 140 may be disposed near the wireless transmitting device 120, for example (but not limited to), within 1 meter. In another embodiment, the wireless transmitting device 120 and the wireless receiving device 140 may also be integrated in the same equipment.

The communication terminal device 100, for example, is a user equipment such as a personal computer, a mobile phone, a laptop computer, a wearable device with virtual reality (VR) / augmented reality (AR), etc. According to the embodiment of Fig. 1, the wireless terminal device 100 includes a transmission interface 102, a driving unit 104, a tunneling unit 106, a packet processing unit 108, and an interference coordinating unit 110.

The transmission interface 102, for example, is a network adapter or a wireless transceiver, capable of transmitting and/or receiving the radio signal.

The driving unit 104, the tunneling unit 106, the packet processing unit 108, and the interference coordinating unit 110 may be implemented in a processing circuit, by ways of software (for example, a program, one or more instructions, data, one or more files, etc.), hardware (for example, a logic circuit), or a combination thereof. The processing circuit is coupled to the transmission interface 102, and is configured to be capable of performing the wireless communication method in embodiments of the disclosure. The processing circuit, for example, may be implemented by a microcontroller, a microprocessor, a digital signal processor, an application specific integrated circuit (ASIC), a digital logic circuit, a field programmable gate array (FPGA), or other hardware components with operating and processing functions.

When the wireless transmitting device 120 transmits a packet to the wireless receiving device 140, the communication terminal device 100 may sniff, through the transmission interface 102, the radio signal transmitted by the wireless transmitting device 120 to obtain the packet in the radio signal. During this process, the communication terminal device 100 does not need to establish a connection (for example, association) with the wireless transmitting device 120. Instead, the communication terminal device 100 passively sniffs the radio signal transmitted from the wireless transmitting device 120. For the wireless transmitting device 120, the transmitting target of the packet, wherein the packet is transmitted by the communication terminal device 100, is the wireless receiving device 140, not the communication terminal device 100.

The driving unit 104 is configured to control the operation(s) of the transmission interface 102. For example, the driving unit 104 is a driver of the transmission interface 102. The tunneling unit 106 may capture the packet from the transmission interface 102 and provide the packet to an upper layer, which is the packet processing unit 108, to process. In other words, the tunneling unit 106 may build a tunneling channel which is from the transmission interface 102 and to the packet processing unit 108. In an embodiment, the tunneling unit 106 may be realized by libpcap function on Linux platform.

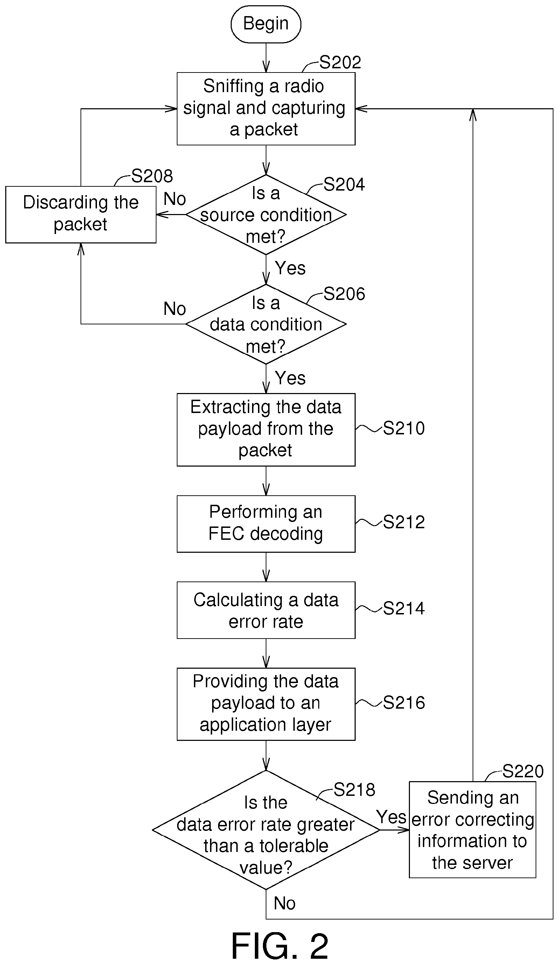

The packet processing unit 108 may filter the packet to obtain data, for example, video data, required by the communication terminal device 100. When the packet processing unit 108 determines that a data error rate of a data payload is greater than a tolerable value, the packet processing unit 108 may also return an error correcting information to the remote server 160, such that the server 160 may enable the wireless transmitting device 120 to adjust an error correction mechanism of the wireless transmitting device 120. The error correction mechanism, for example, is forward error correction (FEC) mechanism. In an embodiment, the packet processing unit 108 may be implemented in a hardware abstract middleware layer. The related operations of the packet processing unit 108 would be described with appropriate reference to the Fig. 2.

The interference coordinating unit 110 may adjust a receiving frequency band of the communication terminal device 100, so as to adjust the transmission interface 102 and the driving unit 104 to receive packets in transmitting frequency band of the wireless transmitting device 120. In this way, the signal interference to the communication terminal device 100, which may be induced by nearby wireless transmitting devices (for example, nearby APs), may be decreased. In an embodiment, the communication terminal device 100 does not include the interference coordinating unit 110.

Fig. 2 shows an exemplary flowchart of a wireless communication method according to an embodiment of the disclosure. The wireless communication method may be implemented, for example, by the wireless terminal device 100 in Fig. 1. The wireless communication method may also be implemented by an electronic device which includes a transmission interface and a processing circuit. For easy to understand, the wireless terminal device 100 is taken as an example in the following description.

In the step S202, the communication terminal device 100 sniffs a radio signal through the transmission interface 102 and captures a packet from the radio signal.

In the step S204, the packet processing unit 108 determines whether the packet meets a source condition or not. If affirmative, the step S206 is executed. In the step S206, the packet processing unit 108 further determines whether the packet meets a data condition or not. If it is determined to be negative in the step S204, the step S208 is executed. In the step S208, the packet processing unit 108 will discard the packet. After the step S208, the process may return to the step S202.

In an embodiment, the source condition includes that the received packet contains the transmitter address corresponding to the wireless transmitting device 120 and the receiver address corresponding to the wireless receiving device 140.

If the determined result is affirmative in the step S206, the packet processing unit 108 will extract the data payload from the packet in the step S210. Otherwise, the packet processing unit 108 will discard the packet in the step S208. In an embodiment, the data condition includes that the received packet contains a specific packet type.

In an embodiment, the step S206 may be implemented, for example, as follows. The packet processing unit 108 obtains a packet type from a header of the packet and determines whether the packet type meets the specific packet type or not. In detail, the header of the packet may include a packet type field which is used to indicate a type of information carried in the packet. The packet type may include a re-transmitted packet, a magic packet, a beacon, a data packet, etc. Since the communication terminal device 100 wants to obtain data provided by the server 160 from the wireless transmitting device 120, the communication terminal device 100 may configure the specific packet type in the data condition to be "data packet" type. According to the configuration, if the packet received by the communication terminal device 100 is a beacon, the communication terminal device 100 will discard the packet. On the contrary, if the packet received by the communication terminal device 100 is a data packet, the communication terminal device 100 extracts the data payload therein.

In the step S212, the packet processing unit 108 performs an FEC decoding on the data payload. In the step S214, the packet processing unit 108 calculates a data error rate occurred in the FEC decoding. For example, the data error rate may be obtained by calculating an FEC error rate of an accumulated amount of received packets. In the step S216, the packet processing unit 108 provides the data payload to an application layer.

In the step S218, the packet processing unit 108 determines whether the data error rate of the data payload is greater than a tolerable value or not. If affirmative, it means that the configuration of a correction mechanism (for example, FEC) may be too loose. In the step S220, the communication terminal device 100 will send an error correcting information to the server 160 through the transmission interface 102, such that the server 160 may provide an error correction parameter, which is for updating an FEC coding scheme, to the wireless transmitting device 120, in order that the wireless transmitting device 120 may adopt a stricter configuration of FEC. For example, the configuration of FEC is adjusted from 1/4 FEC to 1/2 FEC. On the other hand, the server 160 may also provide the update error correction parameter to the communication terminal device 100, such that the communication terminal device 100 and the wireless transmitting device 120 may update FEC parameters synchronously. After the step S220 is executed, the process may returns to the step S202 to continue sniffing radio signals.

If it is determined to be negative in the step S218, it means that the data error rate of the data payload is not greater than the tolerable value, and the process will returns to the step S202.

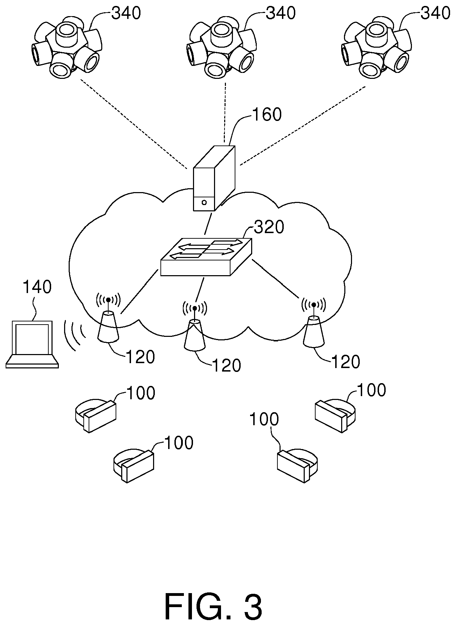

Fig. 3 shows an exemplary architectural diagram of the wireless communication system according to an embodiment of the disclosure. In the example of Fig. 3, the wireless communication system include four communication terminal devices 100, three wireless transmitting devices 120, a wireless receiving device 140, a server 160, a gateway 320, and three video source devices 340.

In this example, the communication terminal device(s) 100, for example, is a VR helmet. The wireless transmitting device(s) 120, for example, is a WiFi AP. The wireless receiving device 140, for example, is a laptop computer. The video source device(s) 340, for example, is an omnidirectional camera. It should be noted that the example is used to describe the disclosure, not to limit the disclosure. The number, the type, and the configuration of the device(s) mentioned above may be adjusted according to different application environments.

The video source device(s) 340 may provide the extracted video data to the server 160. The wireless transmitting device(s) 120 may connect to the server 160 which is in the cloud network through the gateway 320 to obtain the video data from the video source device(s) 340. The wireless transmitting device(s) 120 may transmit the obtained video data to the wireless receiving device(s) 140 by a wireless mechanism. The wireless receiving device 140 is disposed near the wireless transmitting device 120, for example, within 1 meter. The wireless transmitting device 120 and the wireless receiving device 140 may also be integrated in the same equipment.

The communication terminal device(s) 100 is in the signal coverage of the wireless transmitting device(s) 120. When the wireless transmitting device(s) 120 transmits the packet to the wireless receiving device 140, the communication terminal device(s) 100 may sniff the radio signal transmitted by the wireless transmitting device(s) 120 and capture the packet therein, so as to obtain the video data which is from the video source device(s) 340. In this way, the communication terminal device(s) 100 may obtain the video data without establishing the connection with the wireless transmitting device(s) 120.

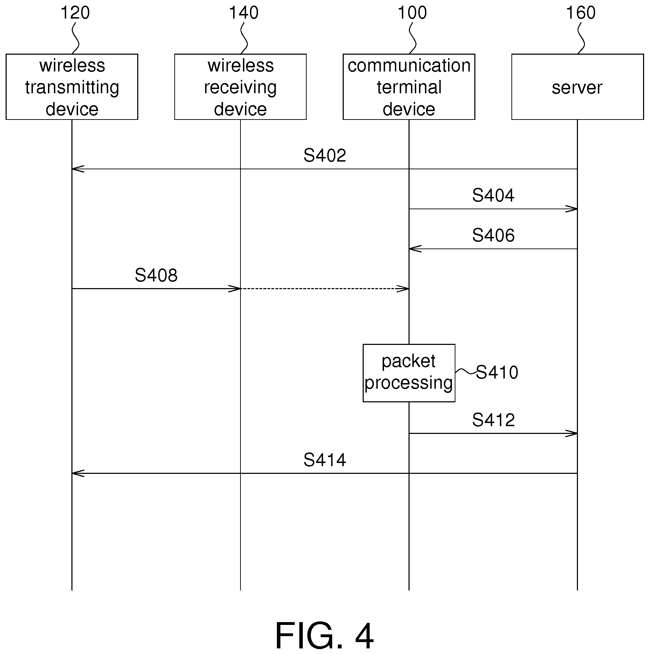

Fig. 4 shows an exemplary sequence diagram of the wireless communication method according to an embodiment of the disclosure.

In the step S402, the server 160 provides the streaming data (for example, video stream) and the FEC error correction parameter to the wireless transmitting device 120.

In the step S404, the communication terminal device 100 sends a request to the server 160, such that the server 160 may return the transmitter address of the wireless transmitting device 120 and the receiver address of the wireless receiving device 140, as shown in the step S406. According to the transmitter address and the receiver address provided by the server 160, the communication terminal device 100 may determine the packet source to be listened.

In the step S408, the wireless transmitting device 120 transmits the packet to the wireless receiving device 140 by a wireless mechanism. During this process, the communication terminal device 100 also listens to, through the propagating medium (for example, the air) of the ratio signal, the radio signal transmitted by the wireless transmitting device 120 and captures the packet therein.

In the step S410, the communication terminal device 100 may process the captured packet as shown in Fig. 2. The captured packet should meet the source condition and the data condition for the captured packet to be deemed a data packet which the communication terminal device 100 wants to acquire. The specific transmitter address and the specific receiver address used as the source condition may be the transmitter address of the wireless transmitting device 120 (for example, IP address of the wireless transmitting device 120) and the receiver address of the wireless receiving device 140 (for example, IP address of the wireless receiving device 140) provided by the server 160 in the step S406.

In the step S412, although the communication terminal device 100 determines that the packet meets the source condition and the data condition, but if the data error rate of the data payload (the data payload is extracted from the packet) is greater than the tolerable value, the communication terminal device 100 will report the error correcting information to the server 160.

In the step S414, in response to the error correcting information, the server 160 provides the error correction parameter, which is used to update the FEC coding scheme, to the wireless transmitting device 120, such that the wireless transmitting device 120 may adopt a stricter FEC code to decrease the data error rate.

The person skilled in the art should understand that the order of the steps mentioned in embodiments of the disclosure may be, except mentioned especially, rearranged according to real-life situations, and that the steps may be executed at the same time or partly at the same time.

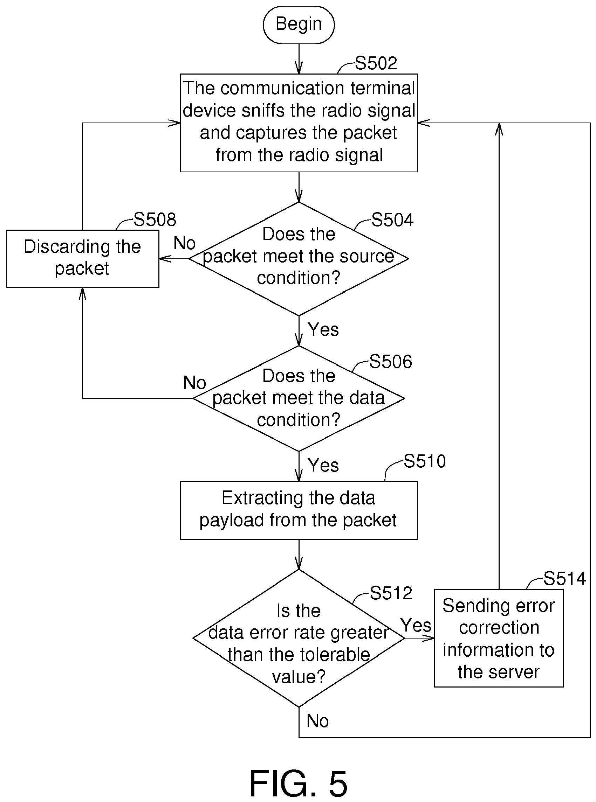

Fig. 5 shows a flowchart of the wireless communication method according to an embodiment of the disclosure. The wireless communication method may be implemented, for example, by the wireless terminal device 100 in Fig. 1. The wireless communication method may also be implemented by the electronic device which includes the transmission interface and the processing circuit. For easy to understand, the wireless terminal device 100 is taken as an example in the following description.

In the step S502, the communication terminal device 100 sniffs the radio signal and captures the packet from the radio signal.

In the step S504, the communication terminal device determines whether the packet meets the source condition or not. The source condition, for example, includes that the packet contains the specific transmitter address corresponding to the wireless transmitting device and the specific receiver address corresponding to the wireless receiving device.

If it is determined to be affirmative in the step S504, the step S506 is executed. In the step S506, the communication terminal device 100 determines whether the packet meets the data condition or not. The data condition, for example, includes that the packet contains the specific packet type. Otherwise, if it is determined to be negative in the step S504, the step S508 is executed. In the step S508, the communication terminal device 100 will discard the packet. After the step S508 is executed, the process will return to the step S502.

If the packet meets the data condition, the communication terminal device 100 will extract the data payload from the packet in the step S510. Otherwise, if the packet does not meet the data condition, the step S508 is executed and the packet is discarded.

In the step S512, the communication terminal device 100 determines whether the data error rate of the data payload, after FEC decoding is performed, is greater than the tolerable value or not. If it is determined to be affirmative in the step S512, the step S514 is executed. In the step S514, the communication terminal device 100 will send the error correcting information to the server 160, such that the server 160 may provide the error correction parameter, which is for updating FEC coding scheme, to the wireless transmitting device 120. If it is determined to be negative in the step S512, the process will returns to the step S502.

To sum up, a wireless communication method and a communication terminal device using the wireless communication method are provided in the disclosure. According to embodiments of the disclosure, establishing the connection with the wireless transmitting device is not required for the communication terminal device to perform data transmission. The communication terminal device may capture, by a way of sniffing, the radio signal which is transmitted from the wireless transmitting device to a dummy wireless receiving device, and capture the packet therein. The communication terminal device may filter the captured packet through a specific condition to obtain the data payload required by the communication terminal device. Since the communication terminal device does not need to establish the connection with the wireless transmitting device, and the communication terminal device sniffs the radio signal which is transmitted by the wireless transmitting device instead, the communication terminal device does not occupy the transmission bandwidth of the wireless transmitting device. In addition, according to the error rate of the decoded data payload, the communication terminal device may also report the error correcting information to the server, such that the wireless transmitting device may adjust the error correction mechanism to decrease the data error rate.

The specification and the above embodiments are considered as examples of the disclosure only, not to limit the disclosure. It will be apparent to those skilled in the art to make various modifications and variations to the disclosed embodiments without departing from the spirit and the scope of the disclosure. The scope of the disclosure is indicated by the following claims and their equivalents.

## Claims

1. A wireless communication method of a communication terminal device (100), **characterized in that** the wireless communication method comprises:
sniffing, by the communication terminal device (100), a radio signal and capturing a packet from the radio signal;
determining, by the communication terminal device (100), whether the packet meets a source condition or not, wherein the source condition comprises that the packet contains a specific transmitter address corresponding to a wireless transmitting device (120) and a specific receiver address corresponding to a wireless receiving device (140);
determining, by the communication terminal device (100), whether the packet meets a data condition or not if the packet meets the source condition, wherein the data condition comprises that the packet contains a specific packet type;
extracting, by the communication terminal device (100), a data payload from the packet if the packet meets the data condition;
determining, by the communication terminal device (100), whether a data error rate of the data payload is greater than a tolerable value or not; and
sending, by the communication terminal device (100), an error correcting information to a server (160) if the error rate of the data payload is greater than the tolerable value, such that the server (160) provides an error correction parameter for updating a forward error correction coding scheme to the wireless transmitting device (120).

2. The wireless communication method according to claim 1, further comprising:
discarding, by the communication terminal device (100), the packet if the packet does not meet the source condition or the data condition.

3. The wireless communication method according to claim 1, further comprising:
obtaining, by the communication terminal device (100), a packet type from a header of the packet; and
determining, by the communication terminal device (100), whether the packet type meets the specific packet type or not.

4. The wireless communication method according to claim 1, further comprising:
sending, by the communication terminal device (100), a request to the server (160), such that the server (160) returns the specific transmitter address and the specific receiver address.

5. The wireless communication method according to claim 1, wherein a distance between the wireless transmitting device (120) and the wireless receiving device (140) is less than or equal to 1 meter.

6. The wireless communication method according to claim 1, further comprising:
performing, by the communication terminal device (100), a forward error correction decoding on the data payload after extracting the data payload from the packet;
calculating, by the communication terminal device (100), the data error rate obtained from performing the forward error correction decoding; and
providing, by the communication terminal device (100), the data payload to an application layer.

7. A communication terminal device (100), **characterized in that** the communication terminal device (100) comprises:
a transmission interface (102), for sniffing a radio signal and capturing a packet from the radio signal; and
a processing circuit coupled to the transmission interface (102), and being configured to:
determining whether the packet meets a source condition or not, wherein the source condition comprises that the packet contains a specific transmitter address corresponding to a wireless transmitting device (120) and a specific receiver address corresponding to a wireless receiving device (140);
determining whether the packet meets a data condition or not if the packet meets the source condition, wherein the data condition comprises that the packet contains a specific packet type;
extracting a data payload from the packet if the packet meets the data condition;
determining whether a data error rate of the data payload is greater than a tolerable value or not; and
sending an error correcting information to a server (160) if the error rate of the data payload is greater than the tolerable value, such that the server (160) provides an error correction parameter for updating a forward error correction coding scheme to the wireless transmitting device (120).

8. The communication terminal device (100) according to claim 7, wherein the processing circuit is further configured to:
discarding the packet if the packet does not meet the source condition or the data condition.

9. The communication terminal device (100) according to claim 7, wherein the processing circuit is further configured to:
obtaining a packet type from a header of the packet; and
determining whether the packet type meets the specific packet type or not.

10. The communication terminal device (100) according to claim 7, wherein the processing circuit is further configured to:
sending a request to the server (160), such that the server (160) returns the specific transmitter address and the specific receiver address.

11. The communication terminal device (100) according to claim 7, wherein a distance between the wireless transmitting device (120) and the wireless receiving device (140) is less than or equal to 1 meter.

12. The communication terminal device (100) according to claim 7, wherein the processing circuit is further configured to:
performing a forward error correction decoding on the data payload after extracting the data payload from the packet;
calculating the data error rate obtained from performing the forward error correction decoding; and
providing the data payload to an application layer.
